# EUROPÄISCHE PATENTSCHRIFT

(11) **EP 2 064 020 B1**
(45) Veröffentlichungstag und Bekanntmachung des Hinweises auf die Patenterteilung: **02.02.2011**
(21) Anmeldenummer: 07803402.2
(22) Anmeldetag: 11.09.2007
(51) Int. Cl.: B23K 20/10, B23K 31/12, B29C 65/08

(54) **VERFAHREN ZUR QUALITÄTSÜBERWACHUNG BEIM ULTRASCHALLSCHWEISSEN**
QUALITY CONTROL METHOD FOR ULTRASOUND WELDING
PROCÉDÉ DE SURVEILLANCE DE LA QUALITÉ EN SOUDAGE PAR ULTRASONS

(30) Priorität: 16.09.2006 DE 102006043605
(43) Veröffentlichungstag der Anmeldung: 03.06.2009
(73) Patentinhaber: Schunk Sonosystems GmbH, 35435 Wettenberg (DE)
(72) Erfinder: GÄBLER, Jörg, 60596 Frankfurt (DE); WARZELHAN, Holger, 35321 Laubach (DE); EBERBACH, Jost, 35418 Buseck (DE)
(74) Vertreter: Stoffregen, Hans-Herbert
(86) Internationale Anmeldenummer: PCT/EP2007/059537
(87) Internationale Veröffentlichungsnummer: WO 2008/031823

(56) Entgegenhaltungen:
- EP-A- 0 247 291

## Beschreibung

Die Erfindung bezieht sich auf ein Verfahren zur Qualitätsüberwachung beim Ultraschallschweißen, bei dem aus zumindest einem den Schweißprozess beeinflussenden und/oder Güte des Schweißprozesses repräsentierenden Parameter zuzuordnenden Messwerten aus durchgeführten Schweißungen ein Messwerttoleranzband bestimmt wird, wobei Messwerte, die nachfolgenden weiteren Schweißungen einem gleichen Parameter zugeordnet werden, bei der Qualitätsüberwachung berücksichtigt werden. Ein derartiges Verfahren ist aus der EP-A-O 247291 bekannt. Beim Fügen von Thermoplasten stellt das Ultraschallschweißen ein bewährtes Verfahren dar. Dabei ermöglichen moderne Ultraschallschweißvorrichtungen der Kunststofftechnik aufgrund digitaler Generatortechnik und des Einsatzes von Mikroprozessoren präzise und reproduzierbare Schweißungen. Bei der Parameterfindung für unterschiedliche Anwendungen und Materialien wird üblicherweise auf Erfahrungswerte zurückgegriffen. Auch werden Parametersätze - häufig softwareunterstützt - empirisch entwickelt. Gleichwenn das Schweißen an sich verlässlich und stabil ist, bereitet die Überwachung des Fügeprozesses Probleme, da häufig erforderliche Qualitätsmerkmale und notwendige Schweißparameter nicht korrelierbar sind. In der Praxis sind sogenannte SPC (Statistical Process Control)-Programme üblich.

Dabei werden geschweißte Teile untersucht, um festzustellen, ob diese den gestellten Anforderungen genügen. Als Qualitätsmerkmale können dabei Abreißkraft, Maßhaltigkeit, Dichtheit, Ergebnisse von Fall- oder Stoßtests, aber auch optische Sichtergebnisse sein. Abgesehen von der äußeren visuellen Überprüfung ist bei der Mehrheit der zu bestimmenden Parameter eine zerstörerische Prüfung erforderlich. Hierzu werden die Daten der geprüften Materialien einem SPC-Programm zugeführt, um Aussagen über Prozessfähigkeit, Ausschussraten etc. zu erhalten. Somit erfolgt eine Aufzeichnung und Auswertung von Prozessdaten, jedoch eine Prozessüberwachung im eigentlichen Sinne nicht.

Nachteil diesbezüglicher Überprüfungsverfahren ist des Weiteren, dass bei der zerstörerischen Prüfung eine Serienproduktion beeinträchtigt wird, so dass nur stichprobenweise eine Bewertung erfolgen kann. Eine Hundertprozentprüfung geht allein bei zerstörungsfreien Prozessen.

Aus der WO-A-2004/096480 ist ein Verfahren zum Verschweißen von insbesondere Litzen bekannt, bei dem eine Regelung von zeitabhängigen Schweißparametern derart erfolgt, dass diese während des Verschweißens an Soll-Werte angepasst werden. Hierzu wird eine Ist-Kurve des zeitabhängigen Parameters gemessen, die mit einer Soll-Kurve verglichen wird. Im Umfang der Abweichung erfolgt eine Regelung zumindest eines Prozessparameters.

Aus der DE-A-44 29 684 ist ein Verfahren zum Verschweißen elektrischer Leiter der eingangs genannten Art bekannt. Dabei werden die für das Kompaktieren bzw. Schweißen charakteristischen Parameter für zu erfolgende Schweißungen dynamisch an das vorausgegangene Verdichten bzw. Schweißen angepasst. Innerhalb fest vorgegebener Grenzwerte liegende Schweißergebnisse werden als Gutschweißungen und außerhalb liegende als Schlechtschweißungen bewertet. Das Toleranzband ist in seiner Breite konstant, wobei sich der Mittelwert entsprechend der aus den Schweißungen ermittelten Messergebnisse in seinem Verlauf ändern kann.

Um Prozessparameter beim Ultraschallschweißen von Kunststoffteilen zu steuern bzw. zu regeln, sieht die DE-A-43 21 874 vor, dass zur Überwachung des Energieeintrags in die Fügestelle zwischen den zu verschweißenden Teilen die Fügekraft während des Schweißvorganges gemessen wird.

Nach der EP-B-0 567 426 wird die Schwingungsamplitude einer Sonotrode, mit der Kunststoffteile verschweißt werden, nach einem vorbestimmten Zeitintervall reduziert, um sodann während der verbleibenden Zeit des Verschweißens bei verringerter Schwingungsamplitude zu arbeiten. Ein diesbezügliches Steuersignal zum Reduzieren der Amplitude kann direkt oder indirekt auch in Abhängigkeit von der auf die zu verschweißenden Werkstücke übertragenen Leistung ausgelöst werden, wie dies z. B. der WO-A-98/49009, der US-A-5,855,706, der US-A-5,658,408 oder der US-A-5,435,863 zu entnehmen ist.

Aus der WO-A-02/098636 ist ein Verfahren zum Verschweißen von Kunststoffteilen bekannt, bei dem zur Optimierung des Schweißens während einer ersten Zeitspanne die Schwingungsamplitude einem vorgegebenen Verlauf folgend reduziert wird, um anschließend mit einen charakteristischen Parameter des Werkstücks zu messen und sodann in Abhängigkeit vom Wert des gemessenen Parameters den Schweißprozess mit einer Sonotrode mit konstanter Amplitude zu beenden, die Ultraschallenergie überträgt.

Um durch Ultraschall-Drahtbonden hergestellte Verbindungen zu prüfen, sieht die DE-A-101 10 048 eine on-line-Überwachung unter Zugrundelegung von vorgegebenen bzw. gespeicherten Master-Werten vor, die Rückschlüsse auf die Festigkeit der Verbindung ermöglichen.

Der vorliegenden Erfindung liegt die Aufgabe zugrunde, ein Verfahren der eingangs genannten Art so weiterzubilden, dass im Vergleich zu dem Stand der Technik ein feinfühligeres Überwachen von Prozessvorgängen ermöglicht wird, um entsprechend Parameteränderungen vornehmen zu können, die zu Schweißergebnissen höherer Güte führen bzw. eine Anpassung an Prozessbedingungen ermöglichen, die sicherstellt, dass im erforderlichen Umfang Gutschweißungen erzielbar sind. Dabei soll ein problemloser Einsatz bei der Serienfertigung möglich sein.

Erfindungsgemäß wird die Aufgabe im Wesentlichen dadurch gelöst, dass in Abhängigkeit von Abweichungen der weiteren Messwerte zu dem aus den vorausgegangenen Messwerten bestimmtem Toleranzband das Messweiietoleranzband für die weiteren Schweißungen in seiner Form oder in Bezug auf seine Ausrichtung zu einem Mittelwert insbesondere dynamisch verändert wird. Dabei kann die Veränderung des Toleranzbands stetig oder nach einer vorgegebenen Anzahl von Schweißungen erfolgen. Letzteres kann zu sprunghaften Verlaufsänderungen bzw. Breitenänderungen des Toleranzbands führen.

Veränderung der Form schließt eine Änderung der Breite des Toleranzbandes, aber auch eine Verlaufsänderung zu einem Mittelwert ein, z. B. bei einer von der Normalverteilung abweichenden Verteilung.

Das sprunghafte Ändern ist dadurch bedingt, dass nach einer Anzahl x Schweißungen mit z. B. x = 1.000 eine Überprüfung des Toleranzbands erfolgt, um dieses gegebenenfalls in seiner Breite zu verändern. Auf diese Weise werden momentane, möglicherweise nicht charakteristische Schwankungen vermieden.

Erfindungsgemäß erfolgt eine dynamische Toleranzanpassung der Toleranzbreite und damit der Toleranz an sich, wobei in Frage kommende Schweißprozesskenngrößen zugrunde gelegt werden können. Dabei kann das Toleranzband in der Breite verkleinert oder vergrößert werden. Eine Verkleinerung des Toleranzbands erfolgt dann, wenn die Messwerte zeigen, dass die Streuung der der Gutschweißung zugeordneten Kenngröße zu einem Toleranzband führt, das kleiner als das ursprünglich vorgegebene ist. Auf diese Weise wird die Güte der herzustellenden Schweißteile verbessert.

Erfolgt eine Vergrößerung des Toleranzbands aufgrund der durchgeführten Messungen der Kenngrößen, so ist die Nebenbedingung zu beachten, dass ein Grenzwert nicht überschritten werden darf, der kennzeichnend dafür ist, ob Schweißteile als Gut- oder Schlechtteile bezeichnet werden.

Das Ausgangstoleranzband wird nach einem Vorlauf von n Schweißungen festgelegt, wobei die Anzahl n derart gewählt wird, dass man von einem statistisch gesicherten Wert ausgehen kann. n kann z. B. 33, 100, 300, 500 oder 1.000 betragen, um nur beispielhaft Zahlen zu nennen.

Statistisch gesicherter Wert soll dabei zum Ausdruck bringen, dass Extremwerte ausgeschlossen sind. Es wird insbesondere im Teach-Mode eine vom Bediener ausgewählte statistisch-relevante Menge für Referenzschweißungen berücksichtigt. Dabei gilt, dass eine Aussage über Mittelwert und Toleranzbreite umso präziser ist, je umfangreicher die Datenmenge ist.

Die Veränderung der Ausrichtung des Toleranzbands zu einem Mittelwert ist derart zu verstehen, dass aufgrund Überprüfungen eine von einer Standardabweichung wie Gauß-Verteilung abweichende Verteilungsform festgestellt wird, also z.B. mehr Minus- als Plusabweichungen ermittelt werden, so dass entsprechend das Toleranzband verändert wird.

Insbesondere ist vorgesehen, dass zur Ermittlung eines Toleranzbands die Schweißdauer gemessen wird, der ein vorgegebener Energieeintrag in das Schweißteil zugeordnet wird. Es wird folglich ein Zeitfenster festgelegt, das dem Toleranzband entspricht, um hierdurch Rückschlüsse über die Güte des Schweißens treffen zu können.

Auch können als Messwerte zur Ermittlung eines Toleranzbands Zeitdauern gewählt werden, innerhalb der eine Relativverstellung zwischen Sonotrode und Gegenelektrode einer das Ultraschallschweißen durchführenden Vorrichtung erfolgt.

Als weitere ein Toleranzband vorgebende Zeitfenster sind solche zu wählen, innerhalb der eine vorgegebene Schweißkraft aufgebracht wird.

All diese Schweißprozesskenngrößen können zur Ermittlung eines Toleranzbands herangezogen werden, um in Abhängigkeit von den durchgeführten und gemessennen Schweißungen feinfühlig auf Veränderungen von z.B. Materialeigenschaften, Schweißflächen von Sonotrode und Gegenelektrode, Zustellbewegungen dieser oder Energieeintrag reagieren zu können, also den Prozess so regeln bzw. beeinflussen zu können, dass Schweißungen höherer Güte zur Verfügung stehen.

Erfindungsgemäß erfolgt ein Korrelieren von Schweißdaten und bestimmten Qualitätsmerkmalen, wodurch die Qualität des Schweißteils nach dem Fügen beeinflusst wird. Es wird eine feinfühlige Prozessüberwachung durchgeführt, wobei ein an den Schweißfortschritt sich anpassendes Toleranzband bezüglich von Messwerten generiert wird, die den Schweißprozess beeinflussen.

Die Anpassung des Toleranzbands erfolgt vorzugsweise automatisch, kann jedoch auch manuell vorgenommen werden. Losgelöst hiervon läuft die Überwachung automatisch im Hintergrund der Schweißvorgänge ab. Dabei besteht auch die Möglichkeit, dass dann, wenn Schweißteile außerhalb des Toleranzbands liegen, ein Alarm ausgelöst wird, um sodann individuell zu entscheiden, ob das Produkt als Ausschuss deklariert wird oder einer erweiterten Prüfung zu unterziehen ist.

Erfindungsgemäß werden die während Referenzschweißungen ermittelten Standardabweichungen, die sich auf die Referenzmenge beziehen, im eigentlichen Produktionsprozess an die auftretenden Toleranzen angepasst. Hierzu werden während des Schweißens Prozessvariablen gesammelt, um fortwährend oder nach einer vorgegebenen Anzahl von Schweißungen neue Toleranzen zu berechnen und abzulegen. Wird dabei die Toleranzbreite verringert, so wird die Sensibilität der Überwachung erhöht und somit die Produktqualität verbessert.

Als Parameter, die im Bezug auf die erfindungsgemäße Lehre zur Bestimmung von Toleranzbändern in Betracht zu ziehen sind, kommen insbesondere in Frage:
- Triggerkraft - die Kraft während des Aufsetzens auf ein Bauteil unter Berücksichtigung des Schwingergewichts zum Einschalten des Ultraschalls,
- Schweißkraft - die Kraft zum Umformen des Bauteils während des Schweißvorgangs,
- Amplitude - die Schweißamplitude in Prozent, um den Kunststoff aufzuschmelzen,
- Haltekraft - die Kraft nach Terminierung des Schweißprozesses zur Auskühlung des Kunststoffes,
- Haltezeit - die Zeitspanne, in der das geschweißte Teil unter der Haltekraft gehalten wird.

Losgelöst hiervon können maximale Leistungen, Energieeintrag, Schweißzeit, Triggerpunkt und absoluter Verstellweg gleichfalls als Schweißparameter berücksichtigt werden.
In weiterer hervorzuhebender Ausgestaltung der Erfindung ist vorgesehen, dass die Veränderung des Toleranzbands selbst dadurch überprüft wird, dass Schweißungen, deren Messwerte innerhalb des Toleranzbands liegen, auf ihre Güte hin überprüft werden.

Sollte sich herausstellen, dass ungeachtet der Tatsache, dass Messwerte von Teilen innerhalb des Toleranzbands liegen, entsprechende Schweißteile eine nicht genügende Qualität zeigen, so kann der Bediener eine Veränderung des Toleranzbands entsprechend vornehmen.

Es zeigen:
- Fig. 1a: eine Prinzipdarstellung einer Ultraschallschweißvowichtung für Metall- schweißen,
- Fig.: 1b eine Prinzipdarstellung einer Ultraschallschweißvorrichtung für Kunststoff- schweißen,
- Fig. 2: eine Prinzipdarstellung eines Toleranzbands,
- Fig. 3: ein Leistungs-Zeit-Diagramm,
- Fig. 4: ein Weg-Zeit-Diagramm und
- Fig. 5: ein Kraft-Weg-Diagramm.

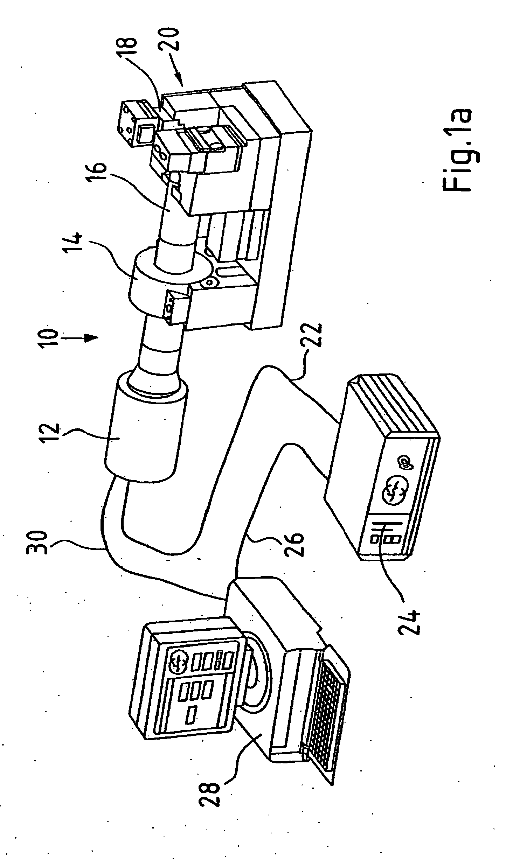

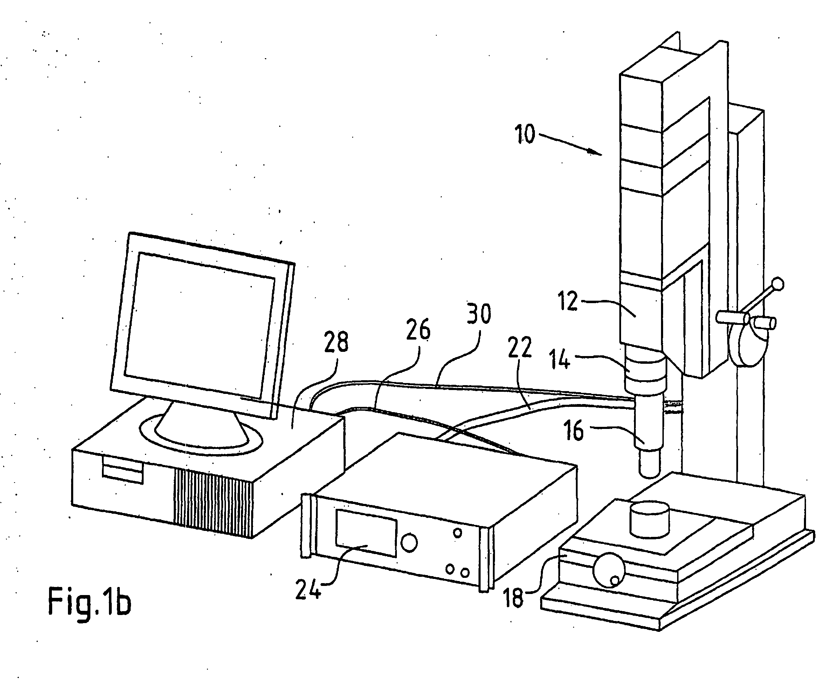

Den Fig. 1a und 1b sind rein prinzipiell Anordnungen zu entnehmen, mit denen im Ausführungsbeispiel der Fig. 1 a Litzen und im Ausführungsbeispiel der Fig. 1 b Kunststoffteile mittels Ultraschall verschweißt werden, wobei aufgrund von Schweißprozesskenngrößen eine Qualitätsüberwachung und Optimierung der Schweißprozesse durchgeführt werden kann. Die erfindungsgemäße Lehre ist nicht auf das Verschweißen von Metallen beschränkt. Vielmehr ist auch das Kunststoffschweißen von der Erfindung erfasst.

Eine Ultraschallschweißvorrichtung bzw. -maschine 10 der Fig. la umfasst in gewohnter Weise einen Konverter 12, gegebenenfalls einen Booster 14 sowie eine Sonotrode 16. Der Sonotrode 16 bzw. einer Fläche dieser ist eine Gegenelektrode 18 zugeordnet, die entsprechend der Lehren der US-A-4,596,352 oder der US-A-4,869,419 mehrteilig ausgebildet sein kann, um einen im Querschnitt beliebig verstellbaren Verdichtungsraum 20 zur Verfügung zu stellen, in den die zu verschweißenden Leiter eingelegt werden. Der Konverter 12 wird über eine Leitung 22 mit einem Generator 24 verbunden, der seinerseits über eine Leitung 26 mit einem Rechner 28 verschaltet ist, um Schweißparameter bzw. Querschnitte der zu verschweißenden Leiter einzugeben bzw. abzurufen.

Die Anordnung der Fig. 1b unterscheidet sich von der nach Fig. 1a dahingehend, dass zum Verschweißen von Kunststoffteilen die Sonotrode 16 mit ihrer Längsachse senkrecht zu den zu verschweißenden Teilen verläuft, also die Schwingungen senkrecht eingeleitet werden.

Bei beiden Ausführungsformen erfolgt eine Prozesserfassung über eine Steuerleitung 30, um entsprechend der erfindungsgemäßen Lehre eine dynamische Anpassung von Toleranzgrößen für in Frage kommende Schweißprozesskenngrößen zu ermöglichen. Dies soll anhand der Fit. 2 und 4 näher erläutert werden.

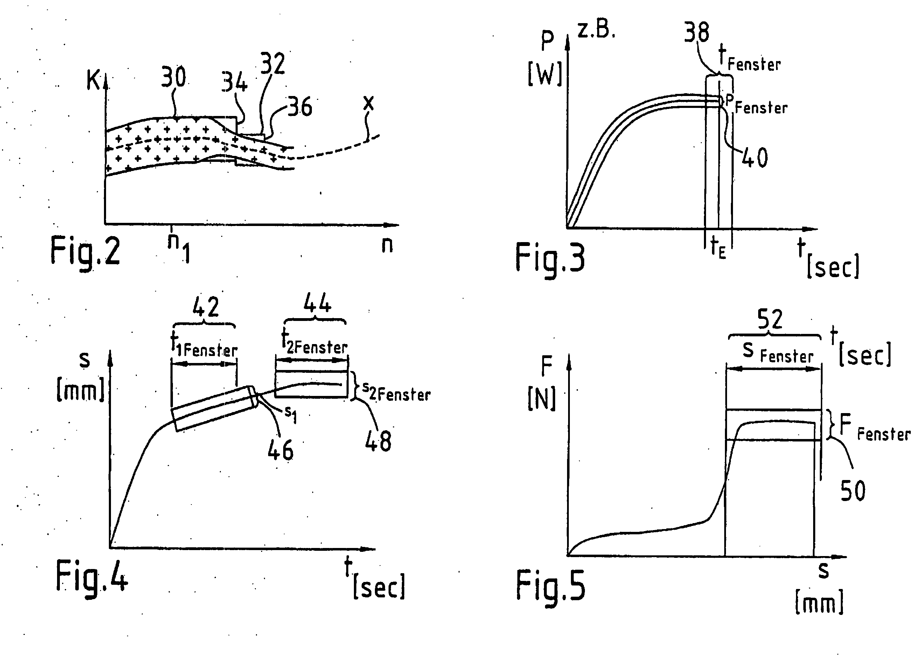

Um während einer Schweißung dynamisch und kontinuierlich einen Schweißprozess überwachen zu können, erfolgt eine Korrelierung von Schweißdaten mit bestimmten Qualitätsmerkmalen und deren Einfluss auf die Qualität des Bauteils nach dem Fügevorrang. So ist in Fig. 2 rein prinzipiell eine Schweißkenngröße k über die Anzahl n der durchgeführten Schweißungen aufgetragen. Als Schweißkenngröße kommt beispielhaft Energieeintrag, Schweißdauer, Triggerpunkt, Verstellweg von Sonotrode zu Amboss, Triggerkraft, Schweißkraft, Haltekraft, Haltezeit oder Amplitude in Frage. Eine Kenngröße kann allein oder aber mehrere Kenngrößen können auch in Kombination berücksichtigt werden.

Ob ein Schweißgut als Gut- oder Schlechtteil zu bezeichnen ist, hängt davon ab, ob die ermittelte Kenngröße innerhalb eines Toleranzbands 30 liegt. Dabei wird das Toleranzband 30 in Abhängigkeit von den während des Schweißvorgangs ermittelten Messwerten der Kenngröße variiert, um feinfühlig auf Änderungen zu reagieren, sei es aufgrund der zu verschweißenden Materialien, sei es z. B. aufgrund der Hardware wie Sonotrode, Amboss, Schweißfläche, der Ultraschallschweißvorrichtung 10.

Vor Beginn der Schweißungen im Produktionsprozess wird im Teach-Mode eine statistisch relevante Menge n₁ von Referenzschweißungen durchgerührt. Dabei gilt, dass je umfangreicher die Datenmenge ist, desto präziser kann eine Aussage über die Breite des Toleranzbands 30 getroffen werden. Dabei wird üblicherweise von einer Normalverteilung ausgegangen, d.h., dass das Toleranzband sich in gleicher Breite zu beiden Seiten eines Mittelwerts x erstreckt. Nach Ermittlung des Ausgangstoleranzbands, das die n₁ Schweißungen umfasst, werden die produktionsrelevanten Schweißungen durchgeführt. Dabei werden Prozessvariablen, d. h. Schweißkenngrößen, automatisch im Hintergrund der Produktion gesammelt und aus diesen Messwerten (Produktionsdaten) fortwährend neue Toleranzen im Hintergrund, also im Rechner 28 berechnet und abgelegt. Ergibt sich dabei z. B. entsprechend der Darstellung der Fig. 2, dass die Messwerte der Schweißkenngröße k geringer streuen als während der Referenzschweißungen, so wird entsprechend das Toleranzband verändert, und zwar in der Breite reduziert, wie dies der Bereich 32 in Fig. 2 verdeutlicht. Somit kann die Güte der Schweißteile erhöht werden, da die Toleranz reduziert wird.

Selbstverständlich kann auch produktionsbedingt eine Vergrößerung des Toleranzbands erfolgen, ohne dass hierdurch Schlechtschweißungen auftreten. Dies wird dadurch verhindert, dass eine maximale Grenze für die Breite des Toleranzbands vorgegeben wird. Schweißungen, die innerhalb des maximalen Toleranzbands liegen, können als GutSchweißungen qualifiziert werden.

Losgelöst hiervon kann erfindungsgemäß eine Überwachung des Toleranzbands 30 selbst dadurch erfolgen, dass eine oder mehrere Schweißungen, deren zugeordnete Schweißkenngrößen innerhalb des Toleranzbands 32 liegen, überprüft werden, um sicherzugehen, dass die gewünschte Schweißgüte auch erfüllt ist.

Ist in Fig. 2 eine stetige Anpassung des Toleranzbands angedeutet, so kann auch eine sprunghafte Veränderung erfolgen. Dies bedeutet, dass erst nach einer vorgegebenen Anzahl von Schweißungen eine Überprüfung des Toleranzbands und sodann eine gegebenenfalls erforderliche Anpassung erfolgt. Dies wird in Fig. 2 durch die Stufen 34, 36 angedeutet.

Den Fig. 3 - 5 sind weitere Beispiele einer Toleranzbandanpassung für Prozessabläufe zu entnehmen, wobei eine zweiparametrische Veränderung erfolgen kann.

So ist in Fig. 3 die Leistung P gegenüber der Zeit t aufgetragen. Dabei kann eine Toleranzbandbreitenanpassung bzgl. der Leistung P und/oder der Zeit t erfolgen. Eine Zeitanpassung ist dabei so zu verstehen, dass ein Zeitfenster 38 festgelegt wird, innerhalb dem ein vorgegebener Energieeintrag in dasy Schweißgut erfolgt sein muss. Liegt der Energieeintrag innerhalb des Zeitfensters 38, so wird das Schweißgut als Gutteil bewertet. Bei einem Energieeintrag, der außerhalb des Zeitfensters 38 endet, wird das Schweißteil als Schlechtschweißung klassifiziert. Die Breite des Fensters 38 wird in Abhängigkeit von den Messwerten variiert, wodurch eine feinfühlige Anpassung der durchzuführenden Schweißprozesse erfolgt.

Entsprechend kann auch ein Toleranzband für die Leistung P vorgegeben werden, das in der Fig. 3 als P Fenster 40 gekennzeichnet ist. Der Energieeintrag, der ein Schweißteil als Gutteil kennzeichnet, muss sodann unter Berücksichtigung der Toleranz zu der Zeit t_{E} erfolgt sein.

In Fig. 4 ist ein Weg-Zeit-Diagramm dargestellt, wobei der über die Zeit t aufgetragene Weg S die Relativverstellung zwischen Sonotrode 16 und Amboss 18 der Ultraschallschweißvorrichtung 10 rein prinzipiell wiedergibt. Aus dem Verlauf der Kurve sind entsprechende Verdichtungs- bzw. Schweißvorgänge ablesbar, die zur Charakterisierung der Güte einer Schweißung herangezogen werden können. Diese Bereiche können mit Toleranzbändern versehen werden, um somit eine Schweißprozessführung zu ermöglichen, die sicherstellt, dass Schweißungen hoher Güte erzielbar sind. So sind in Fig. 4 zwei Zeitfenster 42, 44 eingezeichnet, die den Bereich kennzeichnen, in dem die zu verschweißenden Teile verdichtet sind (Zeitfenster 42) bzw. die Schweißung abgeschlossen ist (Zeitfenster 44).

Das jeweilige Zeitfenster 42 bzw. 44 repräsentiert folglich ein Toleranzband, das in Abhängigkeit von den Messwerten, die die Verstellung von Sonotrode 16 und Amboss 18 zueinander betreffen, erfassen.

Anstelle bzw. alternativ zu den Zeitfenstern 42, 44 kann ein Wegfenster 46 bzw. 48 zur Beeinflussung bzw. Regelung des Schweißvorgangs gewählt werden. In den Wegfenstern 46, 48 müssen folglich Messwerte liegen, bei denen das Verdichten der zu verschweißenden Teile erfasst ist bzw. das Schweißende liegt, sofern Gutteile betroffen sind.

Der Fig. 5 ist ein Kraft-Weg-Diagramm zu entnehmen, dasy für z.B. die Herstellung eines Endknotens elektrischer Leiter charakteristisch ist. So können Fenster bezüglich der Kraft bzw. des Stellwegs festgelegt werden, die in Fig. 5 mit dem Bezugszeichen 50 bzw. 52 gekennzeichnet sind. Dabei wird in der entsprechenden Kraft-Weg-Kurve ein für einen Schweißprozess charakteristischer Bereich ausgewählt, im vorliegenden Fall der des Verschweißens, also des Zustellens von Sonotrode 16 und Amboss 18 während der Ultraschallerregung. Entsprechend der Wegänderung, die den Schweißprozess repräsentiert, werden die eingeleiteten Kräfte gemessen, um sodann ein Toleranzband festzulegen. Mit anderen Worten entsprechen die Fenster 50, 52 der Breite von Toleranzbändern, die in Abhängigkeit von den gemessenen Kenngrößen Kraft bzw. Weg während der Produktion dynamisch verändert bzw. angepasst werden können, um optimale Schweißergebnisse zu erzielen.

## Patentansprüche

1. Verfahren zur Qualitätsüberwachung beim Ultraschallschweißen, bei dem aus zumindest einem den Schweißprozess beeinflussenden und/oder Güte des Schweißprozesses repräsentierenden Parameter zuzuordnenden Messwerten aus durchgeführten Schweißungen ein Messwerttoleranzband bestimmt wird, wobei Messwerte, die nachfolgenden weiteren Schweißungen einem gleichen Parameter zugeordnet werden, bei der Qualitätsüberwachung berücksichtigt werden,
**dadurch gekennzeichnet,**
**dass** in Abhängigkeit von Abweichungen der weiteren Messwerte zu dem aus den vorausgegangenen Messwerten bestimmtem Toleranzband das Messwertetoleranzband für die weiteren Schweißungen in seiner Form oder in Bezug auf seine Ausrichtung zu einem Mittelwert verändert wird.

2. Verfahren nach Anspruch 1,
**dadurch gekennzeichnet,**
**dass** die Veränderung des Toleranzbands stetig erfolgt.

3. Verfahren nach Anspruch 1,
**dadurch gekennzeichnet,**
**dass** die Veränderung des Toleranzbands nach einer vorgegebenen Anzahl von Schweißungen erfolgt.

4. Verfahren nach zumindest einem der Ansprüche 1 - 3,
**dadurch gekennzeichnet,**
**dass** die Veränderung des Toleranzbands durch Bewertung von Schweißteilen überprüft wird, deren Schweißungen Schweißparametern zugeordnet sind, die innerhalb und/oder außerhalb des Toleranzbands liegen.

5. Verfahren nach zumindest Anspruch 1,
**dadurch gekennzeichnet,**
**dass** Messwerte zur Ermittlung eines Toleranzbands Schweißzeiten sind, denen ein vorgegebener Energieeintrag in zu verschweißenden Schweißteilen zugeordnet wird.

6. Verfahren nach zumindest Anspruch 1,
**dadurch gekennzeichnet,**
**dass** Messwerte zur Ermittlung eines Toleranzbands Energieeinträge in zu verschweißende Schweißteile sind, denen eine vorgegebene Schweißzeit zugeordnet wird.

7. Verfahren nach zumindest Anspruch 1,
**dadurch gekennzeichnet,**
**dass** als Messwerte zur Ermittlung eines Toleranzbands Zeitdauern gewählt werden, innerhalb der eine festgelegte Relativverstellung zwischen Sonotrode und Gegenelektrode einer das Ultraschallschweißen durchführenden Vorrichtung erfolgt.

8. Verfahren nach zumindest Anspruch 1,
**dadurch gekennzeichnet,**
**dass** als Messwerte zur Ermittlung eines Toleranzbands Zeitdauern gewählt werden, innerhalb der eine vorgegebene Schweißkraft aufgebracht wird.

9. Verfahren nach zumindest Anspruch 1,
**dadurch gekennzeichnet,**
**dass** aus dem Verlauf zwischen dem Mittelwert der Messwerte und Lage des Toleranzbands Verteilungsform von als Gutschweißung klassifizierten Schweißungen berechnet wird.

10. Verfahren nach zumindest Anspruch 1,
**dadurch gekennzeichnet,**
**dass** aus den Gutschweißungen zugeordneten Messwerten Mittelwerte für das Toleranzband berechnet werden.

11. Verfahren nach zumindest Anspruch 1,
**dadurch gekennzeichnet,**
**dass** aus statistisch gesicherten Werten ein Anfangstoleranzband bestimmt wird, das in Abhängigkeit von nachfolgenden aus Schweißungen ermittelten Messwerten verändert wird.

## Claims

1. Method for quality control in ultrasound welding, in which a measured value tolerance range is determined from measured values from executed welding processes, said measured values being associated with at least one parameter that influences the welding process and/or represents the quality of the welding process, wherein measured values that are assigned to the same parameter in subsequent welding processes are taken into consideration in quality control,
**characterized in**
**that**, depending on deviations of the further measured values relative to the tolerance range determined from the previous measured values, the measured value tolerance range for the further welds is altered in its run or in terms of its position in relation to a mean value.

2. Method in accordance with claim 1,
**characterized in**
**that** the alteration of the tolerance range occurs continuously.

3. Method in accordance with claim 1,
**characterized in**
**that** the alteration of the tolerance range occurs after a predetermined number of welds.

4. Method in accordance with at least one of claims 1-3,
**characterized in**
**that** the alteration of the tolerance range is checked by evaluating welded pieces, the welds of which being assigned to weld parameters lying within and/or outside of the tolerance range.

5. Method in accordance with at least claim 1,
**characterized in**
**that** measured values for determining a tolerance range are welding times, to which is assigned a preset energy input in weld pieces to be welded.

6. Method in accordance with at least claim 1,
**characterized in**
**that** measured values for determining a tolerance range are energy inputs in weld pieces to be welded, to which a preset welding time is assigned.

7. Method in accordance with at least claim 1,
**characterized in**
**that** as measured values for determining a tolerance range periods of time are chosen, during which a defined relative adjustment is made between sonotrode and counter electrode of a device performing the ultrasound welding.

8. Method in accordance with at least claim 1,
**characterized in**
**that** as measured values for determining a tolerance range periods of time are chosen, within which a preset weld force is applied.

9. Method in accordance with at least claim 1,
**characterized in**
**that** distribution form of welds classified as good quality welds is calculated from the course between the mean of the measured values and the position of the tolerance range.

10. Method in accordance with at least claim 1,
**characterized in**
**that** mean values for the tolerance range are calculated from measured values assigned to the good quality welds.

11. Method in accordance with at least claim 1,
**characterized in**
**that** from statistically supported values is determined an initial tolerance range, which is altered based upon subsequent measured values obtained from welds.

## Revendications

1. Procédé destiné à la surveillance de la qualité dans le soudage par ultrasons, dans lequel est définie une plage de tolérance de mesure à partir de valeurs mesurées provenant de soudages effectués à associer à au moins un paramètre influençant la procédure de soudage et/ou représentant la qualité de la procédure de soudage, sachant que sont prises en compte dans la surveillance de la qualité des valeurs mesurées qui sont associés à un même paramètre dans des soudages ultérieurs,
**caractérisé en ce**
**qu'**en fonction d'écarts des valeurs mesurées ultérieures par rapport à la plage de tolérance définie à partir des valeurs mesurées antérieures, la plage de tolérance de mesure pour les soudages ultérieurs est modifiée vers une valeur moyenne dans sa forme ou concernant son orientation.

2. Procédé selon la revendication 1,
**caractérisé en ce**
**que** la modification de la plage de tolérance a lieu en continu.

3. Procédé selon la revendication 1,
**caractérisé en ce**
**que** la modification de la plage de tolérance a lieu après un nombre prédéfini de soudages.

4. Procédé selon au moins une des revendications 1 à 3,
**caractérisé en ce**
**que** la modification de la plage de tolérance est contrôlée par appréciation de pièces soudées dont les soudages sont associés à des paramètres de soudage situés dans et/ou en dehors de la plage de tolérance.

5. Procédé selon au moins la revendication 1,
**caractérisé en ce**
**que** des valeurs mesurées pour définir une plage de tolérance sont des temps de soudage auxquels est associé un apport d'énergie prédéfini dans des pièces à souder.

6. Procédé selon au moins la revendication 1,
**caractérisé en ce**
**que** des valeurs mesurées pour définir une plage de tolérance sont des apports d'énergie dans des pièces à souder, auxquels est associé un temps de soudage prédéfini.

7. Procédé selon au moins la revendication 1,
**caractérisé en ce**
**que** comme valeurs mesurées pour définir une plage de tolérance sont choisis des durées pendant lesquelles a lieu un déplacement relatif défini entre la sonotrode et la contrélectrode d'un dispositif effectuant le soudage par ultrasons.

8. Procédé selon au moins la revendication 1,
**caractérisé en ce**
**que** comme valeurs mesurées pour définir une plage de tolérance sont choisies des durées pendant lesquelles un effort de soudage prédéfini est appliqué.

9. Procédé selon au moins la revendication 1,
**caractérisé en ce**
**qu'**à partir de la variation entre la valeur moyenne des valeurs mesurées et la position de la plage de tolérance, est calculée une forme de distribution de soudages classifiés comme bons soudages.

10. Procédé selon au moins la revendication 1,
**caractérisé en ce**
**qu'**à partir des valeurs mesurées associées aux bons soudages sont calculées des valeurs moyennes pour la plage de tolérance.

11. Procédé selon au moins la revendication 1,
**caractérisé en ce**
**qu'**à partir de valeurs statistiquement valables est définie une plage de tolérance initiale qui est modifiée en fonction de valeurs mesurées ultérieures provenant de soudages.
